# EUROPÄISCHE PATENTANMELDUNG

(11) **EP 1 577 076 A2**
(43) Veröffentlichungstag der Anmeldung: **21.09.2005**
(21) Anmeldenummer: 05004001.3
(22) Anmeldetag: 24.02.2005
(51) Int. Cl.: B29C 65/06

(54) **Verfahren zum Rotationsreibschweissen von Kunststoffteilen sowie Vorrichtung zur Durchführung des Verfahrens**

(30) Priorität: 16.03.2004 DE 102004013836
(71) Anmelder: bielomatik Leuze GmbH + Co KG, 72639 Neuffen (DE)
(72) Erfinder: Schuler, Tobias, 72800 Eningen (DE)
(74) Vertreter: Patentanwälte Ruff, Wilhelm, Beier, Dauster & Partner

(57) **Zusammenfassung**

Ein Verfahren zum Rotationsreibschweißen von Kunststoffen, wobei ein rotationssymmetrischer Kunststoffkörper (K) in Rotation versetzt und rotierend gegen eine Schweißstelle eines stationär gehaltenen Kunststoffteiles (T) gedrückt wird, bis eine Plastifizierung von Anpressflächen des Kunststoffteiles und/oder des Kunststoffkörpers erzielt ist, und wobei nach dem Plastifizieren der rotationssymmetrische Kunststoffkörper zum Stillstand abgebremst und bis zum Erstarren der plastifizierten Anpressflächen gegen das stationäre Kunststoffteil gedrückt gehalten wird, ist bekannt.

Erfindungsgemäß wird der rotationssymmetrische Kunststoffkörper (K) mit einer Umfangsgeschwindigkeit von größer 7m/s und einem Anpressdruck von weniger als 0,5N/mm² gegen die Schweißstelle des stationär gehaltenen Kunststoffteiles (T) gedrückt.

Einsatz für Kunststofftanks.

## Beschreibung

Die Erfindung betrifft ein Verfahren zum Rotationsreibschweißen von Kunststoffteilen, wobei ein rotationssymmetrischer Kunststoffkörper in Rotation versetzt und rotierend gegen eine Schweißstelle eines stationär gehaltenen Kunststoffteiles gedrückt wird, bis eine Plastifizierung von Anpressflächen des Kunststoffteiles und/oder des Kunststoffkörpers erzielt ist und wobei nach dem Plastifizieren der rotationssymmetrische Kunststoffkörper zum Stillstand abgebremst und bis zum Erstarren der plastifizierten Anpressflächen gegen das stationäre Kunststoffteil gedrückt gehalten wird, sowie eine Vorrichtung zur Durchführung eines solchen Verfahrens, wobei eine mit einer Aufnahmeanordnung für den rotationssymmetrischen Kunststoffkörper versehene Rotationsantriebseinheit vorgesehen ist, und wobei zum Anpressen des rotationssymmetrischen Kunststoffkörpers gegen die Schweißstelle des stationären Kunststoffteiles eine Stelleinrichtung vorgesehen ist, die die Aufnahmeanordnung orthogonal zu den Anpressflächen des Kunststoffkörpers und des Kunststoffteiles translatorisch verstellt.

Das Rotationsreibschweißen von thermoplastischen Kunststoffen in der Serienfertigung ist aus der Richtlinie DVS 2218 Teil 1 (Juli 1993) durch den deutschen Verband für Schweißtechnik e.V. allgemein bekannt. Dabei werden die zu verschweißenden Kunststoffteile jeweils in einem Werkzeug eingespannt. Eines der beiden Kunststoffteile ist rotationssymmetrisch gestaltet und in einem rotierbaren Aufnahmewerkzeug gehalten. Für einen Schweißvorgang wird das Aufnahmewerkzeug in Rotation versetzt. Anschließend werden die beiden Kunststoffteile relativ zueinander axial verschoben, wobei vorzugsweise das rotierende Aufnahmewerkzeug axial gegen das stationäre Werkzeug verschoben wird. Die miteinander zu verschweißenden Verbindungsflächen des rotierenden Kunststoffteiles und des stationären Kunststoffteiles berühren sich infolge der Axialverschiebung zwangsläufig. Durch die Axialverschiebung wird nach der Berührung ein Axialdruck auf die Verbindungsflächen aufgebracht, wodurch aufgrund der entstehenden Grenzflächenreibung und der Schererwärmung innerhalb der Kunststoffe eine Plastifizierung des Kunststoffmaterials erzielt wird. Hierdurch entsteht ein Schweißwulst. Jetzt wird der Rotationsantrieb zum Stillstand gebracht, während weiterhin ein Axialdruck auf die Verbindungsflächen aufgebracht wird, bis die plastifizierten Bereiche der Kunststoffteile erstarrt sind.

Bislang war das Rotationsreibschweißen für bestimmte Einsatzzwecke nicht geeignet, da während der Reibphase, in der noch keine vollständige Plastifizierung eingetreten war, erhebliche Fusselbildung auftrat. Die entstehenden Fusseln konnten in nachfolgenden Arbeitsschritten nicht oder nur mit erheblichem Aufwand entfernt werden. Für verschiedene Einsatzzwecke erschien das Rotationsreibschweißen daher als nicht geeignet. Hier wurde das Heizelementschweißen dem Rotationsreibschweißen vorgezogen.

Aufgabe der Erfindung ist es, ein Verfahren und eine Vorrichtung der eingangs genannten Art zu schaffen, durch die die Fusselbildung erheblich reduziert oder ganz vermieden werden kann.

Diese Aufgabe wird für das Verfahren dadurch gelöst, dass der rotationssymmetrische Kunststoffkörper mit einer Umfangsgeschwindigkeit von mehr als 7m/s und einem Anpressdruck von weniger als 0,5N/mm² gegen die Schweißstelle des stationär gehaltenen Kunststoffteiles gedrückt wird. Das stationäre Halten des Kunststoffteiles bedeutet, dass es nicht rotierend gehalten ist. Das Kunststoffteil kann jedoch axial verschiebbar gehalten sein. Der rotierbare Kunststoffkörper kann - je nach Ausführungsform - axial verschiebbar oder axial fixiert gehalten sein. Das Kunststoffteil und der Kunststoffkörper können mittels ihrer entsprechenden Aufnahmewerkzeuge entweder beide aufeinander axial zu bewegt werden, oder eines der beiden Aufnahmewerkzeuge wird axial fixiert gehalten und das jeweils andere Aufnahmewerkzeug wird axial relativ zu dem fixierten Aufnahmewerkzeug verschoben. Durch die erfindungsgemäße Lösung ist es überraschenderweise gelungen, eine Fusselbildung zumindest weitgehend zu vermeiden und dadurch äußerst saubere Schweißnähte zu erzielen. Die erfindungsgemäße Lösung ermöglicht den Einsatz des Rotationsreibschweißens auch für Einsatzzwecke, bei denen bislang ausschließlich das Heizelementschweißen als geeignet erschien. Da das Rotationsreibschweißen gegenüber dem Heizelementschweißen einen wesentlich schnelleren Verfahrensablauf gewährleistet, ist durch die Erfindung eine erheblich höhere Wirtschaftlichkeit bei der Serienfertigung von Kunststoffteilen gegeben. Besonders geeignet ist die erfindungsgemäße Lösung zum Schweißen von Kunststoffkörpern aller Art an Kraftstofftanks für Kraftfahrzeuge. Bevorzugte Kunststoffkörper sind Anschluss- und Belüftungsstutzen, Befestigungs- und Halteelemente und ähnliches. Erfindungsgemäß ist mit dem beschriebenen Anpressdruck der während der Rotationsphase des Kunststoffkörpers aufgebrachte Druck gemeint. Während der anschließenden Stillstandsphase ist der Anpressdruck, der während der Erstarrungsphase der plastifizierten Bereiche aufrechterhalten wird, höher. Vorzugsweise bewegt sich die Erhöhung im Bereich von 30 bis 50 % des Anpressdruckes während der Rotationsphase. Vorzugsweise werden sowohl der Anpressdruck während der Rotationsphase als auch der Anpressdruck während der Stillstandsphase jeweils konstant gehalten.

In Ausgestaltung der Erfindung wird die Umfangsgeschwindigkeit größer 11 m/s gewählt. Vorzugsweise wird zudem der Anpressdruck kleiner oder gleich 0,1 N/mm2 gewählt.

In weiterer Ausgestaltung der Erfindung wird eine Anpresskraft des Kunststoffkörpers und des Kunststoffteiles gegeneinander konstant geregelt. Die Kraftregelung gewährleistet eine Einhaltung einer konstanten Anpresskraft mit hoher Genauigkeit. Vorzugsweise erfolgt eine zweistufige Kraftregelung. Während einer ersten Stufe, in der der Kunststoffkörper sich in Rotation befindet, ist die Kraft geringer als in der anschließenden Plastifizierungs- oder Stillstandsphase, in der die angeschmolzenen Bereiche erstarren.

Für die Vorrichtung wird die der Erfindung zugrundeliegende Aufgabe dadurch gelöst, dass die Aufnahmeanordnung drehfest mit einer Antriebswelle eines Servomotors verbunden ist, der Teil der Rotationsantriebseinheit ist, und die Stelleinrichtung weist einen Servomotor auf, der mittels eines rotatorisch/translatorischen Übertragungsgetriebes mit der Aufnahmeanordnung in Wirkverbindung steht. Servomotoren sind exakt steuerbare Elektromotoren, die ein dynamisches, genaues und überlastfähiges Verhalten in einem großen Drehzahlstellbereich aufweisen. Ihre bevorzugten dynamischen Eigenschaften sind ein geringes Trägheitsmoment, ein hohes Beschleunigungsmoment und ein ruhiger und runder Lauf selbst bei kleinsten Drehzahlen. Durch einen Servomotor ist ein besonders schnelles Beschleunigen und Abbremsen und eine gute Genauigkeit beim Erreichen von Zielpositionen erreichbar. Zudem hat der Servomotor ein Stillstandsmoment. Vorzugsweise ist der Servomotor ein permanent erregter Synchronmotor, der zur Erfassung der Rotorlage einen einfachen Positionsgeber mit sechs Positionsmeldungen je Umdrehung benötigt. Da bei einem Servomotor eine Lageerfassung der Antriebswelle und insbesondere des Drehwinkels der Antriebswelle möglich ist, können rotierende Schweißteile in einer bestimmten Winkelstellung zum Stillstand abgebremst werden. Als rotatorisch/translatorisches Übertragungsgetriebe ist insbesondere ein Zahnstangentrieb vorgesehen, bei dem ein Antriebsritzel des Servomotors mit einer Zahnstange kämmt, die fest mit der axial verschiebbaren Aufnahmeanordnung, insbesondere einem Aufnahmewerkzeug, für den Kunststoffkörper verbunden ist. Die Zahnstange ist in axialer Verschieberichtung ausgerichtet.

In Ausgestaltung der Erfindung ist eine Sensorik zum Erfassen einer Anpresskraft des Kunststoffkörpers an das Kunststoffteil vorgesehen, und dem Servomotor ist eine Regeleinheit zugeordnet, die den Servomotor so regelt, dass eine konstante Anpresskraft während des Rotationsreibschweißvorganges erzielt wird. Durch die Sensorik wird vorzugsweise die jeweils momentane Anpresskraft während des Reibschweißvorganges als Istwert ermittelt und in der Regeleinheit permanent mit vorgegebenen Sollwerten verglichen. Abhängig vom Ergebnis des Vergleiches wird der Servomotor entsprechend angesteuert. Die Anpresskraft ist durch direkte oder durch indirekte Messgrößen erfassbar. Bevorzugte indirekte Messgrößen sind Strommessungen am Servomotor. Eine Stromerhöhung ist proportional zu einer Erhöhung der Anpresskraft. Entsprechend umgekehrt ist eine Stromreduzierung proportional zu einer Reduzierung der Anpresskraft. Durch die konstante Anpresskraft wird bei gleichbleibendem Querschnittsverhältnis im Schweißnahtbereich auch ein konstanter Anpressdruck erzielt, wodurch eine besonders gute Schweißverbindung erreicht wird.

In weiterer Ausgestaltung der Erfindung ist eine elektronische Steuereinheit vorgesehen, die während eines Rotationsreibschweißvorganges die Servomotoren der Rotationsantriebseinheit und der Stelleinrichtung so steuert, dass der Kunststoffkörper eine Umfangsgeschwindigkeit von mehr als 7m/s, vorzugsweise mehr als 11 m/s, und einen Anpressdruck gegen das Kunststoffteil von weniger als 0,5N/mm², vorzugsweise weniger oder gleich 0,1N/mm², aufweist. Die elektronische Steuereinheit ermöglicht eine zentrale und automatische Steuerung und Regelung der Reibschweißvorgänge. Die elektronische Steuereinheit weist vorzugsweise einen Vergleicher und eine Auswerteeinheit auf, die entsprechende Soll- und Istwerte insbesondere bezüglich einer Regelung der Anpresskraft vergleicht und auswertet sowie in entsprechende Steuerbefehle für die Servomotoren überträgt.

Aufgabe der Erfindung ist es auch, eine rotationsreibgeschweißte Verbindung zwischen einem rotationssymmetrischen Kunststoffkörper und einem Kunststoffteil dahingehend zu verbessern, dass eine zumindest nahezu vollständig plastifizierte Schweißnaht mit allenfalls geringer Fusselbildung erzielt wird.

Diese Aufgabe wird dadurch gelöst, dass der Kunststoffkörper einen im Querschnitt spitz zulaufenden Stirnrand aufweist, der mit dem Kunststoffteil im verschweißten Zustand eine kegelförmige Schweißnaht eingeht. Durch den spitz zulaufenden Stirnrand ergibt sich bei dem rotationssymmetrischen Kunststoffkörper zu Beginn eines Rotationsreibschweißvorganges bei der Axialverschiebung des Kunststoffkörpers und des Kunststoffteiles relativ zueinander eine im wesentlichen linienförmige Berührung, sobald der Kunststoffkörper rotierend auf das Kunststoffteil auftrifft. Aufgrund der im Bereich des Stirnrandes stark reduzierten Querschnittsfläche ergibt sich zu Beginn der Reibphase ein spezifisch höherer Druck, auch wenn die Anpresskraft während des gesamten Rotationsreibschweißvorganges konstant gehalten wird. Hierdurch ist es möglich, die Reibphase zeitlich stark zu reduzieren und relativ schnell eine Plastifizierung zu erreichen. Dadurch, dass zu Beginn des Reibvorganges lediglich eine im wesentlichen linienförmige Berührung stattfindet, ergibt sich eine stark verringerte Reibfläche, die zwangsläufig eine verringerte Fusselbildung zur Folge hat.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch in einer Seitenansicht eine Ausführungsform einer erfindungsgemäßen Vorrichtung zum Rotationsreibschweißen von Kunststoffteilen und
- Fig. 2: in vergrößerter Querschnittsdarstellung einen rotationssymmetrischen Kunststoffkörper, der zum Rotationsreibschweißen mittels der Vorrichtung gemäß Fig. 1 eingesetzt wird.

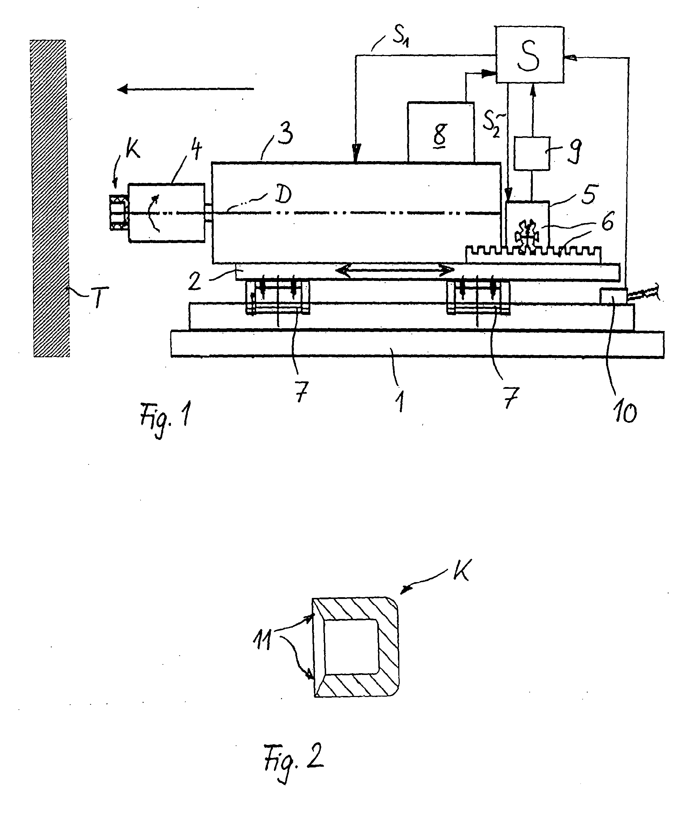

Mittels einer Vorrichtung gemäß Fig. 1, die nachfolgend näher beschrieben wird, wird ein rotationssymmetrischer Kunststoffkörper K (Fig. 2) mit einer nicht näher bezeichneten Schweißfläche eines stationär gehaltenen Kunststoffteiles T durch Rotationsreibschweißung verbunden. Beim dargestellten Ausführungsbeispiel bestehen sowohl der Kunststoffkörper K als auch das Kunststoffteil T aus einem thermoplastischen Kunststoffmaterial. Neben Thermoplasten ist es auch möglich, mittels der in Fig. 1 dargestellten Rotationsreibschweißvorrichtung thermoplastische Elastomere miteinander oder mit Thermoplasten zu verschweißen.

Das Kunststoffteil T ist in nicht näher dargestellter Weise durch ein geeignetes Werkzeug stationär fixiert gehalten. Beim dargestellten Ausführungsbeispiel ist das Kunststoffteil T so ausgerichtet, dass eine zu dem Kunststoffkörper K gerichtete, frontseitige Oberfläche, die auf Höhe des Kunststoffkörpers K als Schweißfläche dient, etwa vertikal ausgerichtet ist. Der Kunststoffkörper K ist mit seiner Rotationssymmetrieachse koaxial zu einer horizontalen Drehachse D eines Aufnahmewerkzeugs 4 eingespannt oder in anderer Art und Weise lösbar fixiert. Das Aufnahmewerkzeug 4 ist in nachfolgend näher beschriebener Weise um die horizontale Drehachse D rotierbar.

Es ist aber auch möglich, die Vorrichtung gemäß Fig. 1 so aufzubauen, dass die Drehachse D etwa vertikal ausgerichtet ist und die Schweißfläche und damit frontseitige Oberfläche des Kunststoffteiles T horizontal in einem entsprechend modifizierten Aufnahmewerkzeug gehalten ist. Bei einer solchen Ausführungsform wäre es für eine schematische Darstellung ausreichend, die Zeichnung gemäß Fig. 1 in einfacher Weise um 90° zu verdrehen, um die beschriebene Ausrichtung zu erzielen.

Das Aufnahmewerkzeug 4 für den rotationssymmetrischen Kunststoffkörper K ist drehfest mit einer nicht näher bezeichneten Antriebswelle eines Servomotors 3 gehalten. Der Servomotor 3 ist auf einem Schlitten 2 befestigt, der mittels einer Schlittenführung 7 in Richtung des Doppelpfeiles axial verschiebbar an einem Grundgestell 1 gehalten ist. Das Grundgestell 1 weist wenigstens eine Führungsschiene auf, um die Linearbeweglichkeit und damit Axialverschieblichkeit der Schlittenführung 7 und des Schlittens 2 zu ermöglichen. Die durch die Schlittenführung 7 und die wenigstens eine Führungsschiene gebildete Führungsanordnung dient zum einen zur Führung der Linearbewegung, d.h. der Axialverschiebung des Schlittens 2. Zum anderen dient die Führungsanordnung zur Aufnahme von Querkräften, die während der verschiedenen Phasen des Rotationsreibschweißvorganges auftreten.

Um eine exakt gesteuerte Axialverschiebung des Schlittens 2 und damit auch des Servomotors 3 zu ermöglichen, ist eine Stelleinrichtung 5, 6 vorgesehen. Als Stellantrieb dient ein Servomotor 5, der in nicht näher dargestellter Weise an dem Grundgestell 1 befestigt ist. Um die Rotationsbewegung einer Antriebswelle des Servomotors 5 in eine translatorische Steuerbewegung des Schlittens 2 zu übertragen, ist als Übertragungsgetriebe ein Zahnstangentrieb 6 vorgesehen. Der Zahnstangentrieb 6 weist ein Ritzel auf, das auf einer Antriebswelle des Servomotors 5 befestigt ist. Die Antriebswelle des Servomotors 5 ist orthogonal zu der Drehachse D des Aufnahmewerkzeugs 4 und damit auch orthogonal zu der Antriebswelle des Servomotors 3 ausgerichtet und ragt in der Darstellung gemäß Fig. 1 aus der Zeichenebene lotrecht heraus. Das Ritzel des Zahnstangentriebs 6 kämmt mit einer geradlinigen Zahnstange, die längs der Axialverschieberichtung auf dem Schlitten 2 befestigt ist. Die Zahnstange des Zahnstangentriebs 6 ist somit parallel zu der Drehachse D ausgerichtet. Der Zahnstangentrieb 6 ist so ausgebildet, dass er eine zumindest weitgehend spielfreie Kraftübertragung ermöglicht.

Um Verschiebebewegungen des Schlittens 2 und damit des Servomotors 3 und des Kunststoffkörpers K erfassen zu können, ist ein Wegmeßsystem 10 vorgesehen.

Für eine zentrale Steuerung und/oder Regelung sowohl des Verschiebeweges als auch einer Umfangsgeschwindigkeit des Kunststoffkörpers K ist eine zentrale elektronische Steuereinheit S vorgesehen, an die das Wegmeßsystem 10 derart angeschlossen ist, dass die zentrale Steuereinheit S entsprechende Wegsignale des Wegmeßsystems 10 erfassen und verarbeiten kann. Der Servomotor 3 weist einen Drehzahlmesser 8 und der Servomotor 5 einen für eine Anpresskraftregelung benötigten Strommesser 9 auf, die beide an die zentrale Steuereinheit S angeschlossen sind, um eine Steuerung und/oder Regelung der Servomotoren 3, 5 durch die zentrale Steuereinheit S zu ermöglichen. Hierzu ist die zentrale Steuereinheit S mit Hilfe von Steuerleitungen S₁, S₂ mit dem Servomotor 3 bzw. dem Servomotor 5 verbunden. In der zentralen Steuereinheit S sind zudem Daten über die Abmessungen des Kunststoffkörpers und insbesondere über dessen Durchmesser und Radius abgespeichert. Auch Daten des Übertragungsgetriebes wie Übersetzungsverhältnis und ähnliches sind abgespeichert. Dadurch ist es für die zentrale Steuereinheit S zum einen möglich, die Umfangsgeschwindigkeit des Kunststoffkörpers K exakt zu steuern.

Der Strommesser 9 stellt einen Kraftsensor dar, der indirekt durch permanente Erfassung der momentanen Stromdaten während des Rotationsreibschweißvorganges Stromspitzen erfasst, die durch ein erhöhtes Drehmoment des Servomotors 5 verursacht sind. Hierdurch sind der Steuereinheit S Rückschlüsse auf die Anpresskraft des Kunststoffkörpers K auf das Kunststoffteil T möglich. Mittels entsprechender Datenspeicherbereiche und Vergleichen zwischen Ist- und Sollwerten kann die zentrale Steuereinheit S die Anpresskraft des Kunststoffkörpers K auf das Kunststoffteil T und damit auch den Anpressdruck regeln. Vorzugsweise wird eine konstante Kraftregelung vorgenommen.

Die Vorrichtung ist so ausgelegt, dass der Servomotor 3 den Kunststoffkörper K mit einer Umfangsgeschwindigkeit von mehr als 7m/s, vorzugsweise mit einer Umfangsgeschwindigkeit von mehr als 11 m/s, antreibt. Der durch den Servomotor 5 erzielte Anpressdruck des Kunststoffkörpers K während des Rotationsreibschweißvorganges auf das Kunststoffteil T wird vorzugsweise äußerst gering gewählt und beträgt höchstens 0,1N/mm². In jedem Fall soll der Anpressdruck geringer als 0,5N/mm² sein. Die für diesen Anpressdruck notwendige Anpresskraft wird durch die entsprechende Steuerung des Servomotors 5 erzielt, wobei die Steuereinheit S eine konstante Kraftregelung vornimmt.

Wie anhand der Fig. 2 erkennbar ist, weist der Kunststoffkörper K einen Stirnrand 11 auf, dessen Stirnfläche kegelförmig abgeschrägt ist. Der Stirnrand läuft somit spitz zu und bildet eine umlaufende, scharfe Stirnkante und an dieser Stirnkante für eine rotierende Berührung mit dem Kunststoffteil eine Kreislinie.

Für den Beginn eines Rotationsreibschweißvorganges wird der eingespannte Kunststoffkörper K in Rotation versetzt, indem der Servomotor 3 anläuft und das Aufnahmewerkzeug 4 auf die Drehzahl einstellt, die der gewünschten Umfangsgeschwindigkeit für die Stirnkante des Stirnrandes 11 des Kunststoffkörpers K entspricht. Anschließend wird der Schlitten 2 mittels des Servomotors 5 und des Zahnstangentriebs 6 zu dem Kunststoffteil T hin axial verschoben. Durch die Axialverschiebung gerät der Kunststoffkörper K mit seiner beschriebenen Umfangsgeschwindigkeit mit der Oberfläche des Kunststoffteiles T in Berührung. Die Reibphase beginnt. Da der Axialdruck auf den Kunststoffkörper K während der Reibphase aufrechterhalten wird, werden die entsprechenden Anpressflächen des Kunststoffteiles T und des Kunststoffkörpers K durch Grenzflächenreibung und Schererwärmung erhitzt und angeschmolzen. Durch den gleichbleibenden Anpressdruck entsteht ein Schweißwulst. Sobald die ausreichende Plastifizierung und Schweißwulstbildung erzielt ist, wird der Servomotor 3 zum Stillstand abgebremst. Der Anpressdruck durch den Servomotor 5 wird jetzt auf den bevorzugten, ebenfalls konstanten Druck für die Stillstandsphase erhöht. Der Druck liegt ca. 30 bis 50 % über dem Anpressdruck während der Rotationsphase. Dieser Druck wird so lange aufrechterhalten, bis die plastifizierten Bereiche des Kunststoffkörpers K und des Kunststoffteiles T im Bereich des Schweißwulstes erstarrt sind. Dann gibt das Aufnahmewerkzeug 4 den Kunststoffkörper K frei. Der Schlitten 2 fährt in seine Ausgangslage zurück. Der Rotationsreibschweißvorgang ist abgeschlossen.

## Patentansprüche

1. Verfahren zum Rotationsreibschweißen von Kunststoffteilen, wobei ein rotationssymmetrischer Kunststoffkörper in Rotation versetzt und rotierend gegen eine Schweißstelle eines stationär gehaltenen Kunststoffteiles gedrückt wird, bis eine Plastifizierung von Anpressflächen des Kunststoffteiles und/oder des Kunststoffkörpers erzielt ist, und wobei nach dem Plastifizieren der rotationssymmetrische Kunststoffkörper zum Stillstand abgebremst und bis zum Erstarren der plastifizierten Anpressflächen gegen das stationäre Kunststoffteil gedrückt gehalten wird, **dadurch gekennzeichnet, dass** der rotationssymmetrische Kunststoffkörper (K) mit einer Umfangsgeschwindigkeit von mehr als 7m/s und einem Anpressdruck von weniger als 0,5N/mm² gegen die Schweißstelle des stationär gehaltenen Kunststoffteiles (T) gedrückt wird.

2. Verfahren nach Anspruch 1, **dadurch gekennzeichnet, dass** die Umfangsgeschwindigkeit größer 11 m/s gewählt wird.

3. Verfahren nach Anspruch 1, **dadurch gekennzeichnet, dass** der Anpressdruck kleiner oder gleich 0,1 N mm² gewählt wird.

4. Verfahren nach Anspruch 1, **dadurch gekennzeichnet, dass** eine Anpresskraft des Kunststoffteiles (T) und des Kunststoffkörpers (K) gegeneinander konstant geregelt wird.

5. Vorrichtung zur Durchführung eines Verfahrens nach dem Oberbegriff des Anspruchs 1 oder nach Anspruch 1, wobei eine mit einer Aufnahmeanordnung für den rotationssymmetrischen Kunststoffkörper versehene Rotationsantriebseinheit vorgesehen ist, und wobei zum Anpressen des rotationssymmetrischen Kunststoffkörpers gegen die Schweißstelle des stationären Kunststoffteiles eine Stelleinrichtung vorgesehen ist, die die Aufnahmeanordnung orthogonal zu den Anpressflächen des Kunststoffkörpers und des Kunststoffteiles translatorisch verstellt, **dadurch gekennzeichnet, dass** die Aufnahmeanordnung (4) drehfest mit einer Antriebswelle eines Servomotors (3) verbunden ist, der Teil der Rotationsantriebseinheit ist, und dass die Stelleinrichtung einen Servomotor (5) aufweist, der mittels eines rotatorisch/translatorischen Übertragungsgetriebes (6) mit der Aufnahmeanordnung (4) in Wirkverbindung steht.

6. Vorrichtung nach Anspruch 5, **dadurch gekennzeichnet, dass** eine Sensorik (9) zum Erfassen einer Anpresskraft des Kunststoffkörpers (K) an das Kunststoffteil (T) vorgesehen ist, und dass dem Servomotor (5) eine Regeleinheit (S) zugeordnet ist, die den Servomotor (5) so regelt, dass eine konstante Anpresskraft während des Rotationsreibschweißvorganges erzielt wird.

7. Vorrichtung nach Anspruch 6, **dadurch gekennzeichnet, dass** eine elektronische Steuereinheit (S) vorgesehen ist, die während eines Rotationsreibschweißvorganges die Servomotoren (3, 5) der Rotationsantriebseinheit und der Stelleinrichtung so steuert, dass der Kunststoffkörper (K) eine Umfangsgeschwindigkeit von mehr als 7m/s, vorzugsweise mehr als 11 m/s, und einen Anpressdruck gegen das Kunststoffteil (T) von weniger als 0,5N/mm², vorzugsweise weniger oder gleich 0,1 Nmm² aufweist.

8. Rotationsreibgeschweißte Verbindung zwischen einem rotationssymmetrischen Kunststoffkörper und einem Kunststoffteil, die über eine rotationssymmetrische Schweißnahtfläche stoffschlüssig miteinander verbunden sind, **dadurch gekennzeichnet, dass** der Kunststoffkörper (K) einen im Querschnitt spitz zulaufenden Stirnrand (11) aufweist, der mit dem Kunststoffteil (TZ) im verschweißten Zustand eine kegelförmige Schweißnaht eingeht.
